# EUROPEAN PATENT APPLICATION

(11) **EP 3 278 947 A1**
(43) Date of publication of application: **07.02.2018**
(21) Application number: 16772698.3
(22) Date of filing: 28.03.2016
(51) Int. Cl.: B29C 33/42, B01D 29/01, B01D 35/02

(54) **MESH FILTER**

(30) Priority: 31.03.2015 JP 2015071253
(71) Applicant: Enplas Corporation, Kawaguchi-shi Saitama-ken 332-0034 (JP)
(72) Inventor: SUZUKI, Yasuhiro, Kawaguchi-shi Saitama 3320034 (JP); OKAMOTO, Shinichiro, Kawaguchi-shi Saitama 3320034 (JP)
(74) Representative: Prinz & Partner mbB
(86) International application number: PCT/JP2016/059799
(87) International publication number: WO 2016/158817

(57) **Abstract**

PROBLEM TO BE SOLVED: It is an object of the present invention to provide an injection-molded mesh filter which can reduce a flow resistance of the fluid flowing through a mesh member.

SOLUTION: In the injection-molded mesh filter 1, a mesh member 4 for filtering out a foreign substance from a fluid includes: a plurality of horizontal bars 6; a plurality of vertical bars 7 perpendicular to the horizontal bars 6; and a rectangular opening 8 defined by an adjacent pair of horizontal bars 6, 6 and an adjacent pair of vertical bars 7, 7. The horizontal bars 6 and the vertical bars 7 have a substantially ellipsoidal cross-sectional shape. Also, the opening 8 is formed of smooth side faces 14, 14 of the adjacent pair of horizontal bars 6, 6 and smooth side faces 15, 15 of the adjacent pair of vertical bars 7, 7, and the opening 8 at upstream side of the fluid flow direction flows the fluid in a smoothly-squeezing manner, and the opening 8 at downstream side of the fluid flow direction flows the fluid in a smoothly-expanding manner.

## Description

### TECHNICAL FIELD

The present invention relates to a mesh filter used for filtering out a foreign substance from a fluid, and in particular, to a mesh filter integrally formed by injection molding.

### BACKGROUND ART

For example, a mesh filter is provided to a middle of an oil pipe in a fuel supply pipe, lubrication device or the like connected to a fuel injection device of an automobile so that the mesh filter filters out a foreign substance from a fluid such as a fuel or oil.

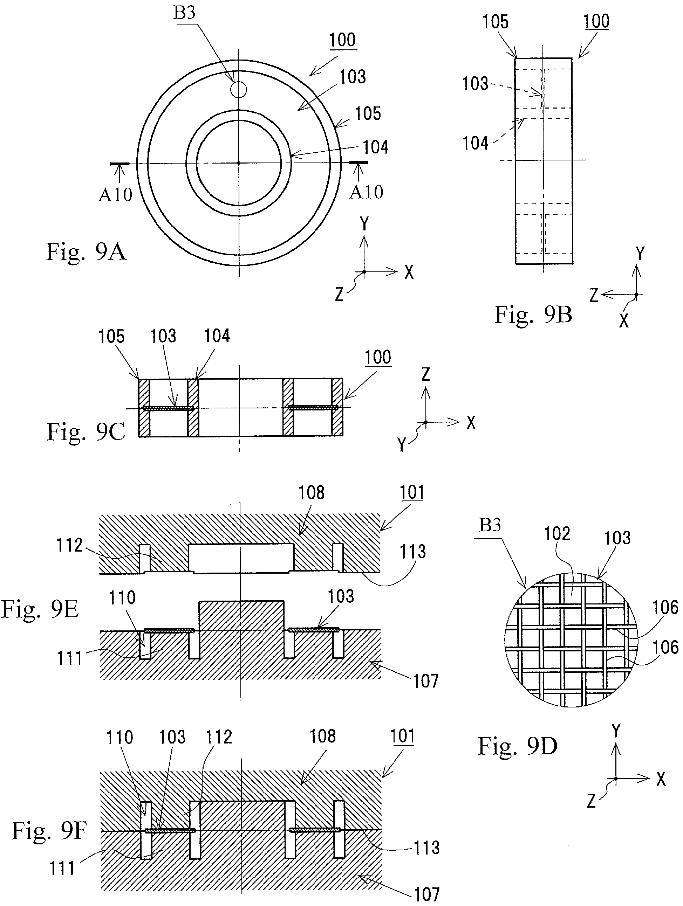

FIG. 9 shows a conventional mesh filter 100. FIG. 9A is a front view of the conventional mesh filter 100, FIG. 9B is a side view of the conventional mesh filter 100, FIG. 9C is a cross-sectional view of the mesh filter 100 taken along a line A10-A10 of FIG. 9A, and FIG. 9D is an enlarged view of a portion B3 of FIG. 9A. Also, FIG. 9E is a cross-sectional view of a mold 101 for illustrating a first stage in a forming method of the conventional mesh filter 100, and FIG. 9F is a cross-sectional view of the mold 101 for illustrating a second stage in the forming method of the conventional mesh filter 100.

The conventional mesh filter 100 shown in FIGS. 9A-D includes: a mesh part 103 through which an oil can flow and on which a multiplicity of openings 102 (for example, a rectangular opening of 0.1 mm x 0.1 mm) which can filter out a foreign substance (metal powder, dust, or the like) of a predefined size (for example, 0.1 mm in diameter); a resin inner cylinder 104 installed along an inner circumferential edge of the mesh part 103; and a resin outer cylinder 105 installed along an outer circumferential edge of the mesh part 103. The mesh part 103 is in a hollow disk-like shape in planar view and formed so as to braid nylon fibers 106 in a grid-like manner, and a rectangular opening 102 is formed between the braided nylon fibers 106.

Such a conventional mesh filter 100 is insert-molded as shown in FIGS. 9E-F. First, a first mold 107 and a second mold 108 are opened and the mesh part 103 is placed on a pedestal 111 in a cavity 110 of the first mold 107 (see FIG. 9E). Then, the second mold 108 is pushed against the first mold 107 (the first mold 107 and the second mold 108 are clamped), a mesh part 103 is interposed between a pressing part 112 of the second mold 108 and the pedestal 111 of the first mold 107, and a cavity 110 is formed for forming an inner cylinder 104 and an outer cylinder 105 on a mold-matching face 113 side of the first mold 107 and the second mold 108. Then, a melted resin is injected from a gate (not shown) into the cavity 110 to integrally form the resin inner cylinder 104 on an inner circumferential edge of the mesh part 103 and to integrally form the outer cylinder 105 on an outer circumferential edge of the mesh part 103 (see FIG. 9F). Such a technique of insert-molding a mesh filter 100 has been conventionally widely known in general (see patent documents 1, 2).

However, the conventional mesh filter 100 shown in FIGS. 9A-D is produced by insert molding, and thus, compared to the case where a whole body is integrally formed by injection molding, an additional process for accommodating the mesh part 103 into a predetermined position in the cavity 110 is needed, which requires an increased number of production processes (see FIG. 9E). Also, in a conventional mesh filter 100 shown in FIGS. 9A-D, the nylon fibers 6 braided in a grid-like manner are easily displaced and a shape and area (cross-sectional area of a flow path through which a fluid flows) of the opening 102 are easily varied, thus easily causing variation in filter performance (performance of removing a foreign substance of a predefined grain size or more).

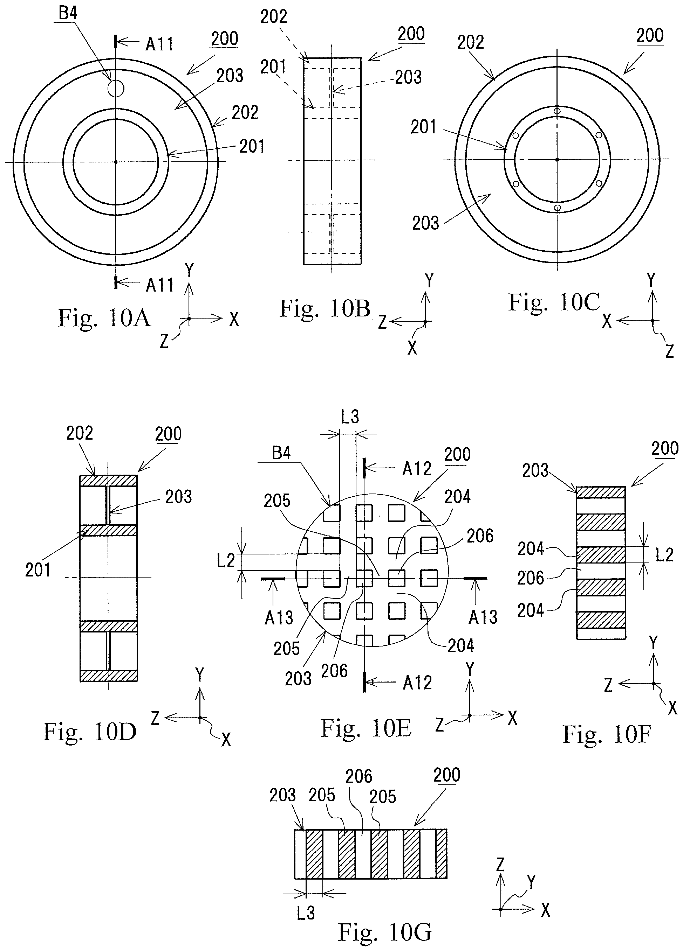

Therefore, the applicant of the present application developed a mesh filter 200 as shown in FIG. 10 in order to solve the above-mentioned problems of the conventional insert-molded mesh filter 100. FIG. 10A is a front view of a mesh filter 200, FIG. 10B is a side view of the mesh filter 200, FIG. 10C is a back view of the mesh filter 200, FIG. 10D is a cross-sectional view of the mesh filter 200 taken along a line A11-A11 of FIG. 10A, FIG. 10E is an enlarged view of a portion B4 (a partially enlarged view of a mesh member) of FIG. 10A, FIG. 10F is a cross-sectional view taken along a line A12-A12 of FIG. 10E, and FIG. 10G is a cross-sectional view taken along a line A13-A13 of FIG. 10E.

An entire body of the mesh filter 200 shown in FIG. 10 is integrally formed by injection molding, and a mesh member 203 is integrally formed between an inner cylinder 201 and an outer cylinder 202. Also, the mesh member 203 is configured to have an opening 206 between adjacent horizontal bars 204, 204 and adjacent vertical bars 205, 205 perpendicular to the horizontal bars 204, 204.

### PRIOR ART DOCUMENTS

### Patent Documents

Patent Document 1: Japanese Unexamined Utility Model Application Publication No. 5-44204
Patent Document 2: Japanese Unexamined Patent Application Publication No. 2007-1232

### DISCLOSURE OF THE INVENTION

### PROBLEMS TO BE SOLVED BY THE INVENTION

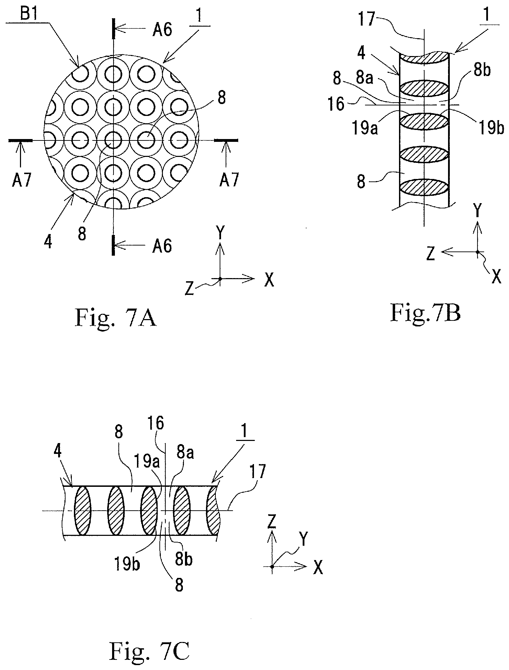

However, while the mesh filter 200 shown in FIG. 10 has an opening 206 formed in a square shape with a side length of 0.1 mm which can be formed in the same dimension as that of an opening 102 of the mesh filter 100 shown in FIG. 9, the width dimensions L2, L3 of the horizontal bar 204 and the vertical bar 205 are 0.1 mm for the reason of a production condition of the mold for injection molding, the width dimensions L2, L3 of the horizontal bar 204 and the vertical bar 205 being larger than a wire diameter of the nylon fiber 106 of the mesh filter 100 shown in FIG. 7. Also, the mesh member 203 of the mesh filter 200 shown in FIG. 10 has the same inner diameter dimension and outer diameter dimension as the dimensions of the mesh member 103 of the mesh filter 100 shown in FIG. 9. As a result, the number of openings 206 of the mesh filter 200 shown in FIG. 10 is decreased to about 3/5 of the number of openings 102 of the mesh filter 100 shown in FIG. 9, causing a new problem of large flow resistance of the fluid flowing through the mesh member 203.

Therefore, it is an object of the present invention to provide an injection-molded mesh filter which can reduce a flow resistance of the fluid flowing through a mesh member.

### SOLUTIONS TO THE PROBLEMS

The present invention relates to a mesh filter 1 in which a mesh member 4 for filtering out a foreign substance from a fluid is integrally injection-molded with frame bodies 2, 3. In the present invention, the mesh member 4 is provided with a plurality of openings 8 serving as a flow path of a fluid. Also, each of the openings 8 includes a fluid inflow-side opening 8a and a fluid outflow-side opening 8b along a fluid flow direction, in which an inner face of the fluid inflow-side opening 8a forms a flow path smoothly narrowing toward downstream side of the fluid flow direction and an inner face of the fluid outflow-side opening 8b forms a flow path smoothly expanding toward downstream side of the fluid flow direction.

Also, the present invention relates to a mesh filter 1 in which a mesh member 4 for filtering out a foreign substance from a fluid is integrally injection-molded with frame bodies 2, 3. In the present invention, the mesh member 4 includes a plurality of horizontal bars 6 aligned in parallel at regular intervals, a plurality of vertical bars 7 aligned in parallel at regular intervals and perpendicular to the horizontal bars 6, and an opening 8 defined by an adjacent pair of horizontal bars 6, 6 and an adjacent pair of vertical bars 7, 7 perpendicular to the horizontal bars 6, 6 to serve as a fluid flow path and having a rectangular shape in planar view. Also, the horizontal bar 6 has a side face part at upstream side of the fluid flow direction that is formed of a first curved face as a convex curved face that narrows the opening 8 toward downstream side of the fluid flow direction, and a side face part at downstream side of the fluid flow direction that is formed of a second curved face 11 as a convex curved face that expands the opening 8 toward downstream side of the fluid flow direction. Also, the vertical bar 7 has a side face part at upstream side of the fluid flow direction that is formed of a third curved face 12 as a convex curved face that narrows the opening 8 toward downstream side of the fluid flow direction, and a side face part at downstream side of the fluid flow direction that is formed of a fourth curved face 13 as a convex curved face that expands the opening 8 toward downstream side of the fluid flow direction. Further, the opening 8 is defined by smooth side faces 14, 14 of the adjacent pair of horizontal bars 6, 6 and smooth side faces 15, 15 of the adjacent pair of vertical bars 7, 7.

### EFFECTS OF THE INVENTION

According to the present invention, the opening at upstream side of the fluid flow direction (fluid inflow-side opening) flows the fluid in a smoothly-squeezing manner, and the opening at downstream side of the fluid flow direction (fluid outflow-side opening) flows the fluid in a smoothly-expanding manner, thus smoothing the flow of the fluid through the opening to thereby greatly reduce a flow resistance compared to the mesh filter forming a flow path having a rectangular prism-like opening (a rectangular prism-like flow path having the same cross-sectional area of the flow path consistently from an upstream end to a downstream end of the fluid flow direction). As a result, the mesh filter according to the present invention can be used under the same pressure condition as an insert-molded mesh filter.

### BRIEF DESCRIPTION OF THE DRAWINGS

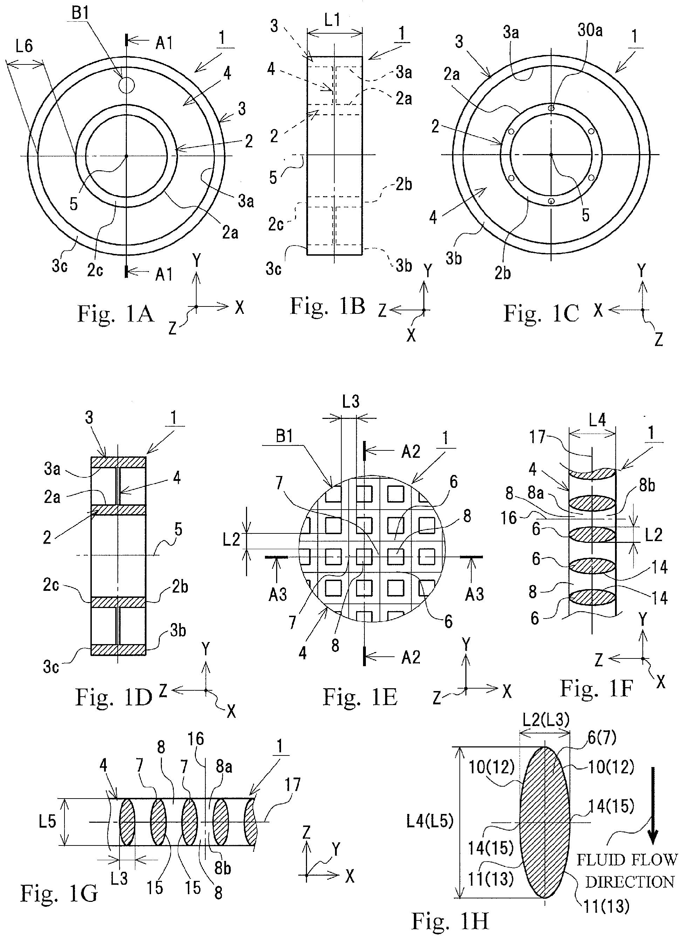

FIG. 1 shows a mesh filter according to the first embodiment of the present invention, in which FIG. 1A is a front view of the mesh filter, FIG. 1B is a side view of the mesh filter, FIG. 1C is a back view of the mesh filter, FIG. 1D is a cross-sectional view of the mesh filter taken along a line A1-A1 of FIG. 1A, FIG. 1E is an enlarged view of a portion B1 of FIG. 1A, FIG. 1F is a cross-sectional view taken along a line A2-A2 of FIG. 1E, FIG. 1G is a cross-sectional view taken along a line A3-A3 of FIG. 1E, and FIG. 1H is an enlarged view of a cross-sectional shape of a horizontal bar and vertical bar forming a mesh member of the mesh filter.

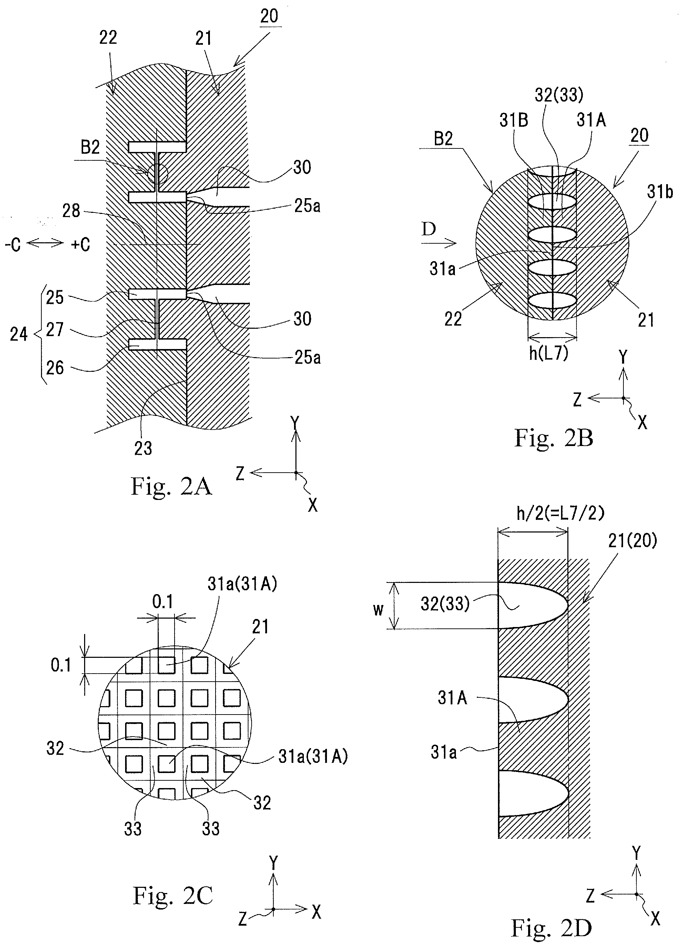

FIG. 2 shows a mold used for an injection molding of a mesh filter according to the first embodiment of the present invention, in which FIG. 2A is a vertical cross-sectional view of the mold, FIG. 2B is an enlarged view of a portion B2 of FIG. 2A, FIG. 2C is a partial plan view of a first mold viewed from D direction of FIG. 2B, and FIG. 2D is a partial enlarged view of FIG. 2B.

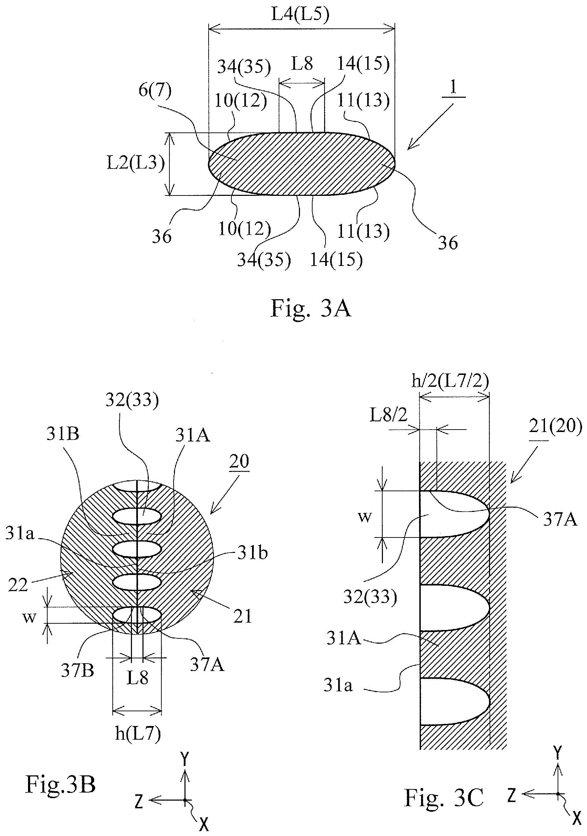

FIG. 3 shows the modification 1 of first embodiment, in which FIG. 3A is a cross-sectional view of the horizontal bar and vertical bar of the mesh filter according to the present modification (corresponding to FIG. 1H), FIG. 3B shows a part of a vertical cross-sectional view of the mold used for the injection molding of the mesh filter according to the present modification (corresponding to FIG. 2B), and FIG. 3C is an enlarged view of a part of FIG. 3B.

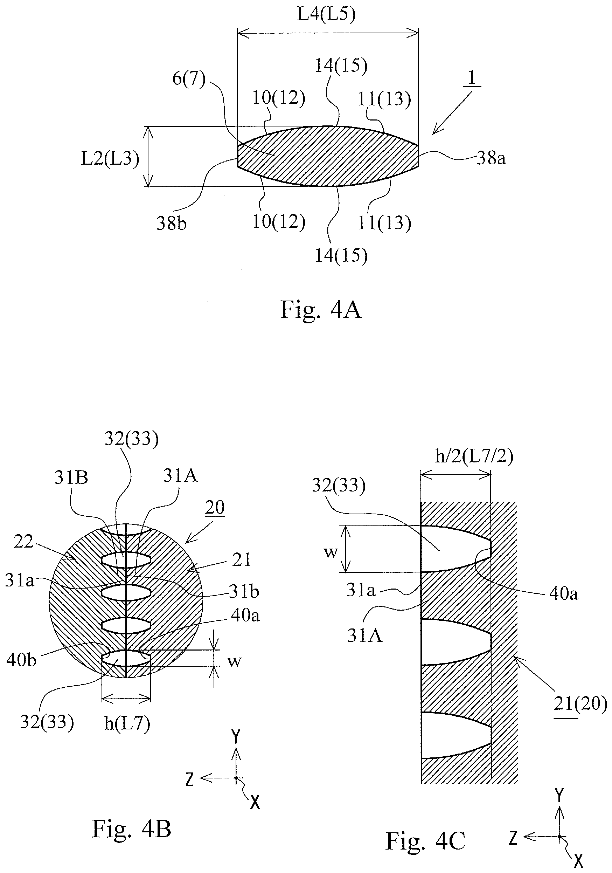

FIG. 4 shows the modification 2 of first embodiment, in which FIG. 4A is a cross-sectional view of the horizontal bar and vertical bar of the mesh filter according to the present modification (corresponding to FIG. 1H), FIG. 4B shows a part of a vertical cross-sectional view of the mold used for the injection molding of the mesh filter according to the present modification (corresponding to FIG. 2B), and FIG. 4C is an enlarged view of a part of FIG. 4B.

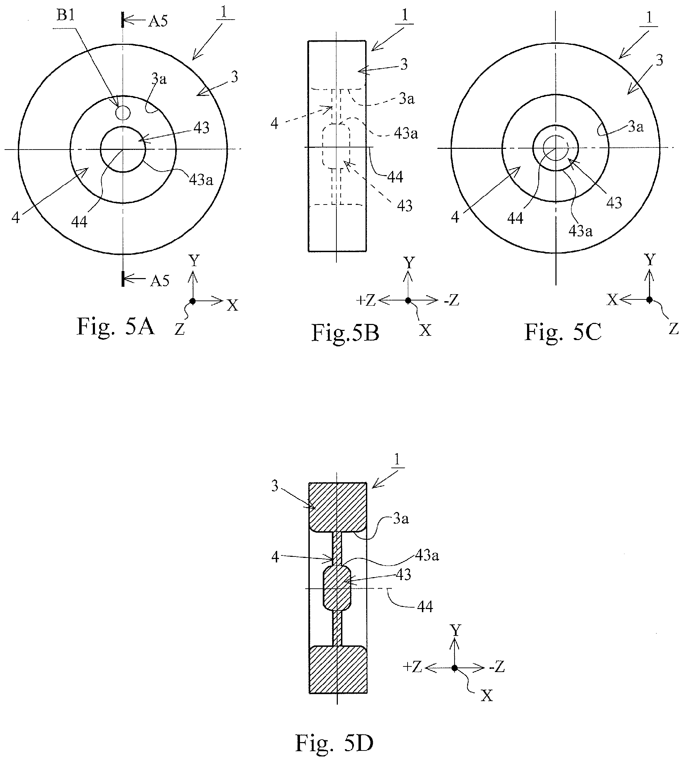

FIG. 5 shows a mesh filter according to the second embodiment of the present invention, in which FIG. 5A is a front view of the mesh filter, FIG. 5B is a side view of the mesh filter, FIG. 5C is a back view of the mesh filter, and FIG. 5D is a cross-sectional view taken along a line A5-A5 of FIG. 5A.

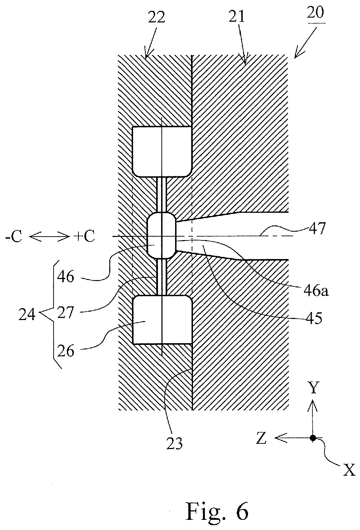

FIG. 6 shows a mold used for an injection molding of a mesh filter according to the second embodiment of the present invention, and is a cross-sectional view corresponding to FIG. 2A.
FIG. 7 shows a mesh member of the mesh filter according to the third embodiment of the present invention and shows the modification of an opening of the mesh filter according to the first embodiment, in which FIG. 7A corresponds to FIG. 1E, FIG. 7B is a cross-sectional view taken along a line A6-A6 of FIG. 7A, and FIG. 7C is a cross-sectional view taken along a line A7-A7 of FIG. 7A.

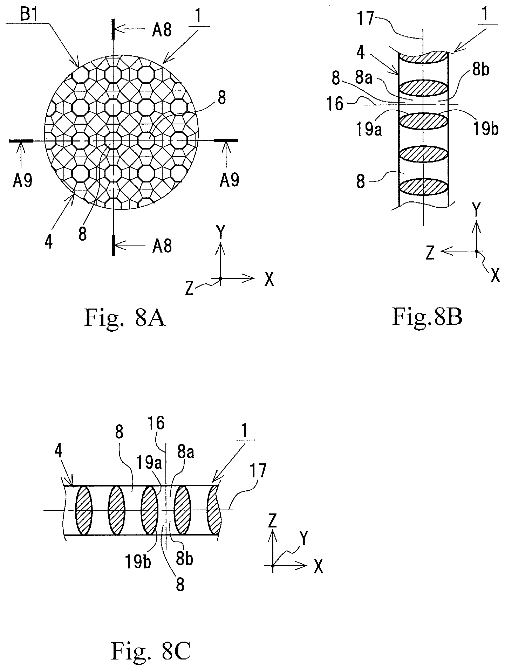

FIG. 8 shows a mesh member of a mesh filter according to the fourth embodiment of the present invention and shows the modification of an opening of the mesh filter according to the first embodiment, in which FIG. 8A corresponds to FIG. 1E, FIG. 8B is a cross-sectional view taken along a line A8-A8 of FIG. 8A, and FIG. 8C is a cross-sectional view taken along a line A9-A9 of FIG. 8A.
FIG. 9 shows a conventional mesh filter, in which FIG. 9A is a front view of a conventional mesh filter, FIG. 9B is a side view of a conventional mesh filter, FIG. 9C is a cross-sectional view of a mesh filter taken along a line A10-A10 of FIG. 9A, FIG. 9D is an enlarged view of a portion B3 of FIG. 9A, FIG. 9E is a cross-sectional view of a mold for illustrating a first stage in a forming method of a conventional mesh filter, and FIG. 9F is a cross-sectional view of the mold for illustrating a second stage in the forming method of a conventional mesh filter.
FIG. 10 shows an injection-molded mesh filter and shows a mesh filter as a comparative example of the present invention, in which FIG. 10A is a front view of the mesh filter, FIG. 10B is a side view of the mesh filter, FIG. 10C is a back view of the mesh filter, FIG. 10D is a cross-sectional view of the mesh filter taken along a line A11-A11 of FIG. 10A, FIG. 10E is an enlarged view of a portion B4 (a partially enlarged view of a mesh member) of FIG. 10A, FIG. 10F is a cross-sectional view taken along a line A12-A12 of FIG. 10E, and FIG. 10G is a cross-sectional view taken along a line A13-A13 of FIG. 10E.

### DESCRIPTION OF PREFERRED EMBODIMENTS

Embodiments of the present invention are described in detail by reference to drawings hereinafter.

### [First Embodiment]

FIG. 1 shows a mesh filter 1 according to the first embodiment of the present invention. FIG. 1A is a front view of a mesh filter 1, FIG. 1B is a side view of the mesh filter 1, FIG. 1C is a back view of the mesh filter 1, and FIG. 1D is a cross-sectional view taken along a line A1-A1 of FIG. 1A. Also, FIG. 1E is an enlarged view of a portion B1 of FIG. 1A (a partially enlarged view of the mesh filter 1), FIG. 1F is a cross-sectional view taken along a line A2-A2 of FIG. 1E (a partially enlarged cross-sectional view of the mesh filter 1), FIG. 1G is a cross-sectional view taken along a line A3-A3 of FIG. 1E (a partially enlarged cross-sectional view of the mesh filter 1), and FIG. 1H is an enlarged view of a cross-sectional shape of a horizontal bar 6 and vertical bar 7 forming a mesh member 4 of the mesh filter 1.

As shown in FIG. 1, the mesh filter 1 integrally includes: a cylindrical inner cylinder 2 (an inner frame body); a cylindrical outer cylinder 3 concentric with the inner cylinder 2 (an outer frame body surrounding the inner frame body), and a mesh member 4 connecting an outer circumferential face 2a of the inner cylinder 2 and an inner circumferential face 3a of the outer cylinder 3 in a radial direction. Also, an entire body of the mesh filter 1 is integrally formed of resin material (66nylon, POM, or the like). Such a mesh filter 1 is provided, for example, to a fuel supply pipe connected to a fuel injection device of an automobile, and the inner cylinder 2 and the outer cylinder 3 are installed to the fuel supply pipe or the like via a seal member (not shown) so as to avoid, during use, a leakage of the fuel (fluid) flowing through the mesh member 4. Also, in the present embodiment, an outer diameter of the inner cylinder 2 is 10 mm, and an outer diameter of the outer cylinder 3 is 16 mm. Further, a thickness of the inner cylinder 2 is 1 mm, and a thickness of the outer cylinder 3 is 1 mm. It is to be noted that the values related to the inner cylinder 2 and the outer cylinder 3 are shown as examples for ease of understanding of the mesh filter 1 according to the present embodiment, and can be appropriately changed depending on the condition of use and the like.

The inner cylinder 2 and the outer cylinder 3 have the same length L1 along a center axis 5, in which one end faces 2b, 3b in a direction along the center axis 5 are both located on the same imaginary plane perpendicular to the center axis 5, and the other end faces 2c, 3c in a direction along the center axis 5 are both located on the same imaginary plane perpendicular to the center axis 5. The relationship between the inner cylinder 2 and the outer cylinder 3 is not limited to the present embodiment but can be modified according to an installation condition of the mesh filter 1 and can have different dimensions in a direction along the center axis 5 of the inner cylinder 2 and the outer cylinder 3, and also the one end face 2b in the direction along the center axis 5 of the inner cylinder 2 may be located so as to be displaced from the one end face 3b in the direction along the center axis 5 of the outer cylinder 3. Also, the other end face 2c in the direction along the center axis 5 of the inner cylinder 2 may be located so as to be displaced from the other end face 3c in the direction along the center axis 5 of the outer cylinder 3.

The mesh member 4 is formed so as to have the same thickness dimension along an X-Y plane, in which the X-Y plane is an imaginary plane perpendicular to the direction along the center axis 5 of the inner cylinder 2. Then, the portion in the mesh member 4 excluding a connecting portion between the inner cylinder 2 and the outer cylinder 3 includes: a plurality of horizontal bars 6 aligned at regular intervals perpendicularly to Y-axis and in parallel with X-axis; a plurality of vertical bars 7 aligned at regular intervals perpendicularly to the horizontal bars 6 and in parallel with Y-axis; and a plurality of openings 8 defined by the horizontal bars 6 and the vertical bars 7 in a rectangular shape.

The horizontal bar 6 and the vertical bar 7 have the same ellipsoidal cross-sectional shapes perpendicular to a longitudinal direction (an extending direction of the horizontal bar 6, an extending method of the vertical bar 7) (see FIG. 1H). The horizontal bar 6 has a side face part at upstream side of the fluid flow direction that is formed of a first curved face 10 (having a quarter ellipsoidal-arc cross-sectional shape in FIG. 1H) as a convex curved face that smoothly narrows the opening 8 toward downstream side of the fluid flow direction, and a side face part at downstream side of the fluid flow direction that is formed of a second curved face 11 (having a quarter ellipsoidal-arc cross-sectional shape in FIG. 1H) as a convex curved face that smoothly expands the opening 8 toward downstream side of the fluid flow direction. Also, the vertical bar 7 has a side face part at upstream side of the fluid flow direction that is formed of a third curved face 12 (having a quarter ellipsoidal-arc cross-sectional shape in FIG. 1H) as a convex curved face that smoothly narrows the opening 8 toward downstream side of the fluid flow direction, and a side face part at downstream side of the fluid flow direction that is formed of a fourth curved face 13 (having a quarter ellipsoidal-arc cross-sectional shape in FIG. 1H) as a convex curved face that smoothly expands the opening 8 toward downstream side of the fluid flow direction. The horizontal bar 6 has both side faces 14, 14 formed of the first curved face 10 and the second curved face 11, in which the first curved face 10 and the second curved face 11 are smoothly connected (without forming an edge). Also, the vertical bar 7 has both side faces 15, 15 formed of the third curved face 12 and the fourth curved face 13, in which the third curved face 12 and the fourth curved face 13 are smoothly connected. The horizontal bar 6 and the vertical bar 7 have the same ellipsoidal cross-section and thus are shown in FIG. 1H together.

The opening 8 is a fluid flow path defined by the adjacent pair of horizontal bars 6, 6 and the adjacent pair of vertical bars 7, 7 perpendicular to the horizontal bars 6, 6, penetrates the mesh member 4 from front face side to back face side, has a square shape in planar view, and has the narrowest portion at a center in a thickness direction of the mesh member 4 (a center in a direction along Z-axis and a center in a fluid flow direction). Also, a cross-sectional shape of the opening 8 at a center of a thickness direction of the mesh member 4 is formed in a square shape with a side length of 0.1 mm. An inner face of the opening 8 is formed of the facing side faces 14, 14 of the adjacent pair of horizontal bars 6, 6 (side faces formed of the first curved face 10 and the second curved face 11) and the facing side faces 15, 15 of the adjacent pair of vertical bars 7, 7 (side faces formed of the third curved face 12 and the fourth curved face 13). That is, the four faces composing the inner face of the opening 8 is formed of the smooth side faces 14, 14 of the adjacent pair of horizontal bars 6, 6 and the smooth side faces 15, 15 of the adjacent pair of vertical bars 7, 7.

The opening 8 formed as such is configured in such a manner that, when the opening is divided into a fluid inflow-side opening 8a (or 8b) and a fluid outflow-side opening 8b (or 8a) along a fluid flow direction, the fluid outflow-side opening 8b (or 8a) is formed in a reversed shape of the fluid inflow-side opening 8a (or 8b). In other words, a cross-sectional shape of the opening 8 taken along an imaginary plane (Y-Z coordinate plane or X-Z coordinate plane) extending in the fluid flow direction and including a center line 16 of the opening 8 is in a line-symmetric shape with respect to an imaginary center line 17 on an imaginary plane (X-Y coordinate plane) perpendicular to a fluid flow direction at a center of the fluid flow direction. Further, a cross-sectional shape of the opening 8 taken along an imaginary plane (Y-Z coordinate plane or X-Z coordinate plane) extending in a fluid flow direction and including a center line 16 of the opening 8 is in a line-symmetric shape with respect to a center line 16 of the openings 8. Here, the fluid inflow-side opening is configured to gradually reduce a cross-sectional area of the flow path along the fluid flow direction so as to flow the fluid in a smoothly-squeezing manner. Also, the fluid outflow-side opening is configured to gradually increase a cross-sectional area of the flow path along the fluid flow direction so as to flow the fluid in a smoothly-expanding manner.

In the present embodiment, the horizontal bar 6 and the vertical bar 7 have 0.1 mm of width dimensions (L2, L3) between adjacent openings 8, 8 (the dimension L2 in a direction along the Y-axis in FIG. 1E or the dimension L3 in a direction along the X-axis in FIG. 1E), and have 0.3 mm of height dimensions (L4, L5) along a direction along a center axis 5 of the inner cylinder 2 (a direction of the Z-axis in FIG. 1F or the Z-axis in FIG. 1G). Also, as shown in FIG. 1A, this mesh member 4 has a radial dimension L6 along the X-axis which is formed in a range of 2-5 mm, the optimal dimension thereof being set according to a structure of an installation part or the like of the mesh filter 1. Also, in this mesh member 4, an opening 8 having a square shape with a side length of 0.1 mm is formed at a connecting part between the inner cylinder 2 and the outer cylinder 3.

FIG. 2 shows a mold 20 used for an injection molding of the mesh filter 1 according to the present embodiment. In this FIG. 2, FIG. 2A is a vertical cross-sectional view of the mold 20, FIG. 2B is an enlarged view of a portion B2 of FIG. 2A (a partially enlarged cross-sectional view of the mold 20), FIG. 2C is a partial plan view of a first mold 21 viewed from D direction of FIG. 2B, and FIG. 2D is a partial enlarged view of FIG. 2B.

As shown in FIG. 2A, in the mold 20, a cavity 24 for injection-molding the mesh filter 1 is formed on a side of a mold-matching face 23 of a first mold 21 and a second mold 22. The cavity 24 includes: a cylindrical first cavity part 25 for forming the inner cylinder 2 of the mesh filter 1; a cylindrical second cavity part 26 for forming the outer cylinder 3 of the mesh filter 1; and a hollow disk-like third cavity part 27 for forming the mesh member 4 of the mesh filter 1. Also, the first mold 21 includes pin gates 30 opening at the one end face 25a side in a direction along the center axis 28 of the first cavity part 25 at six positions at regular intervals along a circumferential direction of the first cavity part 25 (see gate marks 30a in FIG. 1 C). While the present embodiment shows an aspect where the pin gates 30 opening in the cavity 24 are provided at six positions at regular intervals along a circumferential direction of the first cavity part 25 as an example, the pin gates 30 may be provided, without limitation, at two or more positions according to an outer diameter dimension of the first cavity part 25 or the like. Also, a ring gate may be provided instead of the plurality of pin gates 30.

At a portion for forming the third cavity part 27 of the first mold 21 and at a portion for forming the third cavity part 27 of the second mold 22, a protrusion for forming the openings 8 is formed in such a manner that the protrusion is divided into a protrusion 31A and a protrusion 31B (see FIG. 2B, D). The protrusions 31A, 31B of the first mold 21 and the second mold 22 are configured to have the same height dimension h/2 (h=L4, L5), and respective tip faces 31a, 31b abut to each other at the time of mold-clamping of the first mold 21 and the second mold 22. The protrusion 31B of the second mold 22 has a reversed shape of the protrusion 31A of the first mold 21.

The tip face 31a of the protrusion 31A of the first mold 21 and the tip face 31b of the protrusion 31B of the second mold 22 are configured to form a cross-sectional shape of a portion positioned at a center along a fluid flow direction in the opening 8 (a portion positioned at a center in a thickness direction of the mesh member 4 in the opening 8), and formed in a square plane shape with a side length of 0.1 mm (see FIG. 2C).

In the first mold 21 and the second mold 22 in a mold-clamping state, a horizontal bar groove 32 for forming the horizontal bar 6 and a vertical bar groove 33 for forming the vertical bar 7 are formed between the protrusions 31A, 31B and the protrusions 31A, 31B, and a cross-sectional shape of the horizontal bar groove 32 and the vertical bar groove 33 has the same ellipsoidal shape as that of the horizontal bar 6 and the vertical bar 7. Here, a groove-width dimension w of the horizontal bar groove 32 and the vertical bar groove 33 is equal (0.1 mm) to a width dimension L2 (L3) of the horizontal bar 6 and the vertical bar 7, and a groove-height dimension L7 is equal to a sum (h) of a height dimension (h/2) of the protrusion 31A and a height dimension (h/2) of the protrusion 31B and is equal (0.3 mm) to a height dimension (thickness dimension of the mesh member 4) of the horizontal bar 6 and the vertical bar 7. As shown in FIG. 2C, a plurality of the horizontal bar grooves 32 extending along the X-axis are formed at regular intervals along the Y-axis. Also, a plurality of the vertical bar grooves 33 extending along the Y-axis are formed at regular intervals along the X-axis. Then, the horizontal bar groove 32 and the vertical bar groove 33 have the same ellipsoidal cross-sectional shape and thus are shown in FIG. 2B, D together.

In the mold 20 having such a structure, as shown in FIG. 2A, while the first mold 21 and the second mold 22 are mold-clamped, the melted resin material (for example, 66nylon or POM) is injected into the cavity 24 from the plurality of pin gates 30, and then a pressure in the cavity 24 is maintained at a predetermined pressure to cool down the mold 20. Then, the second mold 22 is released (mold-opened) from the first mold 21 in a - C direction, and the mesh filter 1 in the cavity 24 is pushed out from the cavity 24 by an ejector pin (not shown) to take out the injection-molded mesh filter 1 from the mold 20 (see FIG. 1). Then, in the mold 20, the second mold 22 in an opened state is moved in a + C direction (a direction moving closer to the first mold 21), where the second mold 22 is pushed against the first mold 21 so that the first mold 21 and the second mold 22 are mold-clamped. One cycle of the injection molding of the mesh filter 1 according to the present embodiment completes in a shorter time than one cycle of the insert molding of the mesh filter 100 according to a conventional example. As a result, a productivity of the mesh filter 1 according to the present embodiment is improved compared to the insert-molded mesh filter 100, thereby reducing a product price compared to the insert-molded mesh filter 100.

In the mesh filter 1 according to the present embodiment as illustrate above, an inner face of the opening 8 (the fluid inflow-side opening 8a and the fluid outflow-side opening 8b) is formed of the smooth side face 14, 14 of the ellipsoidal horizontal bar 6 and the smooth side face 15, 15 of the ellipsoidal vertical bar 7, and the fluid inflow-side opening 8a (or 8b) flows the fluid in a smoothly-squeezing manner and the fluid outflow-side opening 8b (or 8a) flows the fluid in a smoothly-expanding manner, thus smoothing the flow of the fluid through the opening 8 to thereby greatly reduce (about 1/4) a flow resistance compared to the mesh filter 200 forming a flow path having a rectangular prism-like opening 8 (a rectangular prism-like flow path having the same cross-sectional area of the flow path consistently from an upstream end to a downstream end of the fluid flow direction) (see FIG. 8). As a result, the mesh filter 1 according to the present embodiment can be used under the same pressure condition as an insert-molded mesh filter 100 (see FIG. 7).

Also, the mesh filter 1 according to the present embodiment includes a mesh member 4 with a plurality of openings 8 each having the same dimension (a square shape with a side length of 0.1 mm) which can surely filter out a foreign substance of a size of more than 0.1 mm in diameter contained in the fuel by having the mesh filter installed to, for example, a fuel supply pipe connected to a fuel injection device of an automobile. In the insert-molded mesh filter 100 having a mesh part 103 formed of the nylon fibers braided in a grid-like manner, a shape of an opening 102 of the mesh part 103 may be easily deformed to cause variation in a lower-limit value of a grain size of foreign substances to be filtered out by the mesh part 103, which may unwantedly allow a foreign substance that should be passed through the mesh part 103 to be filtered out, or a foreign substance that should be filtered out at the mesh part 103 to be passed through, resulting in an insufficient filter performance (see FIG. 7). Meanwhile, the mesh filter 1 according to the present embodiment does not cause variation in the lower-limit value of a grain size of foreign substance to be filtered out, and thus a filter performance can be improved compared to the case where a variation is caused in an area of the openings 8.

Also, in the mesh filter 1 according to the present embodiment, height dimensions (L4, L5) of the horizontal bar 6 and the vertical bar 7 is three times larger than rib width dimensions (L2, L3) of the horizontal bar 6 and the vertical bar 7, and thus a rigidity of the mesh member 4 can be increased. With this configuration, the mesh filter 1 according to the present embodiment exhibits an excellent mold-releasability from the mold 20 and a high accuracy in forming a shape of the mesh member 4.

In the mesh filter 1 according to the present embodiment, the mesh member 4 is configured to connect center portions in a direction along the center axis 5 of the inner cylinder 2 and the outer cylinder 3 in a radial direction, but not limited to this, the mesh member 4 may be positioned closer to one end of the direction along the center axis 5 of the inner cylinder 2 and the outer cylinder 3 or closer to the other end of the direction along the center axis 5 of the inner cylinder 2 and the outer cylinder 3.

### (Modification 1 of First Embodiment)

FIG. 3 shows the modification 1 of the first embodiment. FIG. 3A is a cross-sectional view of the horizontal bar 6 and vertical bar 7 of the mesh filter 1 according to the present modification (corresponding to FIG. 1H), FIG. 3B shows a part of a vertical cross-sectional view of the mold 20 used for the injection molding of the mesh filter 1 according to the present modification (corresponding to FIG. 2B), and FIG. 3C is an enlarged view of a part of FIG. 3B.

As shown in FIG. 3A, in the mesh filter 1 according to the present modification, a first curved face 10 and a second curved face 11 of the horizontal bar 6 are connected via flat side face parts 34, and a third curved face 12 and a fourth curved face 13 of the vertical bar 7 are connected via flat side face parts 35. Here, in the horizontal bar 6 and the vertical bar 7, the flat side face parts 34, 34 (35, 35) on both sides in a width direction are positioned in parallel, and a width dimension L2 (L3) at the flat side face parts 34, 34 (35, 35) is made consistent. The flat side face parts 34, 34 (35, 35) are positioned at a center of the horizontal bar 6 and the vertical bar 7 in a height direction, with one end thereof being smoothly connected to a semi-ellipsoidal part 36 on the one end side and the other end thereof being smoothly connected to a semi-ellipsoidal part 36 on the other end side. A cross-section of the horizontal bar 6 and the vertical bar 7 formed as such is substantially ellipsoidal shape.

In the openings 8 defined by the pair of horizontal bars 6, 6 and the pair of vertical bars 7, 7 having a cross-sectional shape as shown in FIG. 3A (see FIG. 1E), an inner face of a center part in a height direction of the horizontal bar 6 and the vertical bar 7 (a thickness direction of the mesh member 4) is formed of flat side face parts 34 (35) of the pair of horizontal bars 6, 6 and the pair of vertical bars 7, 7, and a rectangular prism-like flow path having a constant flow path cross-sectional area is formed at a center part in a thickness direction of the mesh member 4.

As shown in FIGS. 3B-C, in the mold 20 for injection molding of the mesh filter 1 according to the present modification, a rectangular prism-like portion corresponding to the flat side face parts 34, 35 of the horizontal bar 6 and the vertical bar 7 is formed in a divided manner (divided into a first rectangular prism-like part 37A and a second rectangular prism-like part 37B) at a tip side of the protrusion 31A of the first mold 21 and a tip side of the protrusion 31B of the second mold 22. In the mold 20 mentioned above, when a tip shape of the protrusion 31A is degraded (worn out or the like) by repeatedly using the mold 20, all the tips of the protrusions 37A, 37B are repaired by grinding or the like and reused for the injection molding of the mesh filter 1. Here, since the tip sides of the protrusions 37A, 37B are formed in a rectangular prism-like shape (the first rectangular prism-like part 37A, the second rectangular prism-like part 37B), the shape of the tip faces of the protrusions 37A, 37B can be maintained in a square shape with a side length of 0.1 mm. Therefore, the mold 20 as mentioned above can be used for an injection molding of the highly accurate mesh filter 1 for a long period of time while maintaining a dimension accuracy of the opening 8 of the mesh filter 1.

In the mesh filter 1 according to the present modification, an inner face of the opening 8 is formed of a smooth side face 14 of the substantially ellipsoidal horizontal bar 6 and a smooth side face 15 of the substantially ellipsoidal vertical bar 7, and the fluid inflow-side opening 8a (or 8b) flows the fluid in a smoothly-squeezing manner and the fluid outflow-side opening 8b (or 8a) flows the fluid in a smoothly-expanding manner, thus smoothing the flow of the fluid through the opening 8 to thereby achieving the same effect as that of the mesh filter 1 according to the first embodiment (see FIG. 1).

### (Modification 2 of First Embodiment)

FIG. 4 shows the modification 2 of the first embodiment. FIG. 4A is a cross-sectional view of the horizontal bar 6 and vertical bar 7 of the mesh filter 1 according to the present modification (corresponding to FIG. 1H), FIG. 4B shows a part of a vertical cross-sectional view of the mold 20 used for the injection molding of the mesh filter 1 according to the present modification (corresponding to FIG. 2B), and FIG. 4C is an enlarged view of a part of FIG. 4B.

As shown in FIG. 4A, the mesh filter 1 according to the present modification is in a shape in which one end and the other end of a height direction (longitudinal direction) of the horizontal bar 6 and the vertical bar 7 having ellipsoidal cross-sectional shapes are cut off and flat faces 38a, 38b are formed on the one end and the other end of the height direction of the horizontal bar 6 and the vertical bar 7. Then, as shown in FIG. 4A, in the mesh filter 1 according to the present modification, a first curved face 10 and a second curved face 11 of the horizontal bar 6 are formed in a smoothly-convex curved face in an ellipsoidal shape, in which the first curved face 10 and the second curved face 11 are smoothly connected. Also, as shown in FIG. 4A, in the mesh filter 1 according to the present modification, a third curved face 12 and a fourth curved face 13 of the vertical bar 7 are formed in a smoothly-convex curved face in an ellipsoidal shape, in which the third curved face 12 and the fourth curved face 13 are smoothly connected. A cross-section of the horizontal bar 6 and the vertical bar 7 formed as such is substantially ellipsoidal shape.

As shown in FIGS. 4B-C, in the mold 20 for injection molding of the mesh filter 1 according to the present modification, a flat part 40a corresponding to a flat face 38a of one end of the horizontal bar 6 and a flat part 40b corresponding to a flat face 38b of the other end of the horizontal bar 6 are formed at a bottom of the horizontal bar groove 32 for forming the horizontal bar 6 of the first mold 21 and the second mold 22. Also, in the mold 20 for injection molding of the mesh filter 1 according to the present modification, a flat part 40a corresponding to a flat face 38a of one end of the vertical bar 7 and a flat part 40b corresponding to a flat face 38b of the other end of the vertical bar 7 are formed at a bottom of the vertical bar groove 33 for forming the vertical bar 7 of the first mold 21 and the second mold 22.

In the mesh filter 1 according to the present modification, an inner face of the opening 8 is formed of smooth side faces 14, 14 of the substantially ellipsoidal horizontal bar 6 and smooth side faces 15, 15 of the substantially ellipsoidal vertical bar 7, and the fluid inflow-side opening 8a (or 8b) flows the fluid in a smoothly-squeezing manner and the fluid outflow-side opening 8b (or 8a) flows the fluid in a smoothly-expanding manner, thus smoothing the flow of the fluid through the opening 8 to thereby achieving the same effect as that of the mesh filter 1 according to the first embodiment (see FIG. 1).

In the mesh filter according to the present modification, the first curved face 10 and the second curved face 11 of the horizontal bar 6 and the third curved face 12 and the fourth curved face 13 of the vertical bar 7 may have a convex curved face of an arc shape with radius of curvature of the same cross-sectional shape. A cross-section of the horizontal bar 6 and the vertical bar 7 formed as such is substantially ellipsoidal shape.

### [Second Embodiment]

FIG. 5 shows a mesh filter 1 according to the second embodiment of the present invention. FIG. 5A is a front view of a mesh filter 1, FIG. 5B is a side view of the mesh filter 1, FIG. 5C is a back view of the mesh filter 1, and FIG. 5D is a cross-sectional view taken along a line A5-A5 of FIG. 5A.

As shown in FIG. 5, the mesh filter 1 includes: a disk-like gate connecting part 43 positioned at a center part; a cylindrical outer cylinder 3 (outer frame body) concentric with a center axis 44 of the gate connecting part 43 and positioned so as to surround the gate connecting part 43; and a mesh member 4 connecting an outer circumferential face 43a of the gate connecting part 43 and an inner circumferential face 3a of the outer cylinder 3 in a radial direction. Here, the mesh member 4 is formed in the same manner as the mesh member 4 of the mesh filter 1 according to the first embodiment (see FIG. 1E-H). Also, the gate connecting part 43 corresponds to a part where a gate 45 for injection molding opens, and has an outer diameter dimension of the size the same as or larger than an inner diameter dimension of the opening of the gate 45 (see FIG.6), which is a thickness dimension that protrudes from both front face and back face of the mesh member 4. Further, while the outer cylinder 3 is formed in a cylindrical shape, the shape can be optionally changed according to a structure of an installation part to which the mesh filter 1 is to be installed (for example, a fuel supply pipe connected to a fuel injection device of an automobile). The mesh filter according to the present embodiment formed as such can achieve the same effect as that of the mesh filter 1 according to the first embodiment.

FIG. 6 shows a mold 20 used for an injection molding of a mesh filter 1 according to the present embodiment, and is a cross-sectional view corresponding to FIG. 2A. In the mold 20 shown in FIG. 6, the same reference numbers are used to represent the same parts in the mold 20 in FIG. 2, and any explanations redundant with that of the mold 20 in FIG. 2 are omitted.

As shown in FIG. 6, in the mold 20, a cavity 24 for injection-molding the mesh filter 1 is formed on a side of a mold-matching face 23 of a first mold 21 and a second mold 22. The cavity 24 includes: a disk-like first cavity part 46 for forming the gate connecting part 43 of the mesh filter 1; a cylindrical second cavity part 26 for forming the outer cylinder 3 of the mesh filter 1; and a hollow disk-like third cavity part 27 for shaping the mesh member 4 of the mesh filter 1. Also, the first mold 21 includes gates 45 opening at the one end face 46a side in a direction along the center axis 47 of the first cavity part 46. Here, the third cavity part 27 is formed in the same manner as the third cavity part 27 of the mold according to the first embodiment (see FIGS. 2B-D).

### [Third Embodiment]

FIG. 7 shows a mesh member 4 of the mesh filter 1 according to the third embodiment and shows the modification of an opening 8 of the mesh filter 1 according to the first embodiment. FIG. 7A corresponds to FIG. 1E, FIG. 7B is a cross-sectional view taken along a line A6-A6 of FIG. 7A, and FIG. 7C is a cross-sectional view taken along a line A7-A7 of FIG. 7A.

The mesh member 4 of the mesh filter 1 according to the present embodiment shown in FIG. 7 is formed by integrally injection-molding the inner cylinder 2 and the outer cylinder 3 in the same manner as the mesh member 4 of the mesh filter 1 according to the first embodiment (see FIG. 1). Here, the mesh filter 1 according to the present embodiment is different from the mesh filter 1 having a rectangular opening 8 in planar view according to the first embodiment in that the opening 8 of the mesh member 4 is in a circular shape in planar view.

Each of the openings includes a fluid inflow-side opening 8a and a fluid outflow-side opening 8b along a fluid flow direction, in which an inner face 19a of the fluid inflow-side opening 8a has a flow path smoothly narrowing toward downstream side of the fluid flow direction and an inner face 19b of the fluid outflow-side opening 8b has a flow path smoothly expanding toward downstream side of the fluid flow direction. The inner faces (19a, 19b) of the openings 8 as mentioned above are formed of a convex curved face which narrows the flow path the most at a boundary between the inner face 19a of the fluid inflow-side opening 8a and the inner face 19b of the fluid outflow-side opening 8b (see FIG. 7B, FIG. 7C).

Also, a cross-sectional shape of the opening 8 taken along an imaginary plane (Y-Z coordinate plane or X-Z coordinate plane) extending in a fluid flow direction and including a center line 16 of the opening 8 is in a line-symmetric shape with respect to an imaginary center line 17 on an imaginary plane (X-Y coordinate plane) perpendicular to a fluid flow direction at a center of the fluid flow direction. That is, as shown in FIG. 7B and FIG. 7C, a cross-sectional shape of the inner face 19a of the fluid inflow-side opening 8a and the inner face 19b of the fluid outflow-side opening 8b is in a line-symmetric shape with respect to an imaginary center line 17.

Also, a cross-sectional shape of the opening 8 taken along an imaginary plane (Y-Z coordinate plane or X-Z coordinate plane) extending in a fluid flow direction and including a center line 16 of the opening 8 is in a line-symmetric shape with respect to a center line 16 of the openings 8. That is, as shown in FIG. 7B and FIG. 7C, a cross-sectional shape of the inner face 19a of the fluid inflow-side opening 8a and a cross-sectional shape of the inner face 19b of the fluid outflow-side opening 8b is in a line-symmetric shape with respect to a center line 16 of the opening 8.

In the mesh filter 1 according to the present embodiment, the opening 8 at upstream side of the fluid flow direction (fluid inflow-side opening 8a) flows the fluid in a smoothly-squeezing manner, and the opening 8 at downstream side of the fluid flow direction (fluid outflow-side opening 8b) flows the fluid in a smoothly-expanding manner, thus smoothing the flow of the fluid through the opening 8 to thereby greatly reduce a flow resistance compared to the mesh filter forming a flow path having a rectangular prism-like opening 8 (a rectangular prism-like flow path having the same cross-sectional area of the flow path consistently from an upstream end to a downstream end of the fluid flow direction). As a result, the mesh filter 1 of the present embodiment can be used under the same pressure condition as an insert-molded mesh filter.

In the mesh filter 1 according to the present embodiment, the above fluid inflow-side opening 8a can be used as a fluid outflow-side opening, and the above fluid outflow-side opening 8b can be used as a fluid inflow-side opening.

### [Fourth Embodiment]

FIG. 8 shows a mesh member 4 of the mesh filter 1 according to the fourth embodiment and shows the modification of an opening 8 of the mesh filter 1 according to the first embodiment. FIG. 8A corresponds to FIG. 1E, FIG. 8B is a cross-sectional view taken along a line A8-A8 of FIG. 8A, and FIG. 8C is a cross-sectional view taken along a line A9-A9 of FIG. 8A.

The mesh member 4 of the mesh filter 1 according to the present embodiment as shown in FIG. 8 is formed by integrally injection-molding the inner cylinder 2 and the outer cylinder 3 in the same manner as the mesh member 4 of the mesh filter 1 according to the first embodiment (see FIG. 1). Here, the mesh filter 1 according to the present embodiment is different from the mesh filter 1 having a rectangular opening 8 in planar view according to the first embodiment in that the opening 8 of the mesh member 4 is in an octagonal shape in planar view.

Each of the openings includes a fluid inflow-side opening 8a and a fluid outflow-side opening 8b along a fluid flow direction, in which an inner face 19a of the fluid inflow-side opening 8a has a flow path smoothly narrowing toward downstream side of the fluid flow direction and an inner face 19b of the fluid outflow-side opening 8b has a flow path smoothly expanding toward downstream side of the fluid flow direction. The inner faces (19a, 19b) of the openings 8 as mentioned above is formed of a convex curved face which narrows the flow path the most at a boundary between the inner face 19a of the fluid inflow-side opening 8a and the inner face 19b of the fluid outflow-side opening 8b (see FIG. 8B, FIG. 8C).

Also, a cross-sectional shape of the opening 8 taken along an imaginary plane (Y-Z coordinate plane or X-Z coordinate plane) extending in a fluid flow direction and including a center line 16 of the opening 8 is in a line-symmetric shape with respect to an imaginary center line 17 on an imaginary plane (X-Y coordinate plane) perpendicular to a fluid flow direction at a center of the fluid flow direction. That is, as shown in FIG. 8B and FIG. 8C, a cross-sectional shape of the inner face 19a of the fluid inflow-side opening 8a and the inner face 19b of the fluid outflow-side opening 8b is in a line-symmetric shape with respect to an imaginary center line 17.

Also, a cross-sectional shape of the opening 8 taken along an imaginary plane (Y-Z coordinate plane or X-Z coordinate plane) extending in a fluid flow direction and including a center line 16 of the opening 8 is in a line-symmetric shape with respect to a center line 16 of the openings 8. That is, as shown in FIG. 8B and FIG. 8C, a cross-sectional shape of the inner face 19a of the fluid inflow-side opening 8a and a cross-sectional shape of the inner face 19b of the fluid outflow-side opening 8b is in a line-symmetric shape with respect to a center line 16 of the opening 8.

In the mesh filter 1 according to the present embodiment, the opening 8 at upstream side of the fluid flow direction (fluid inflow-side opening 8a) flows the fluid in a smoothly-squeezing manner, and the opening 8 at downstream side of the fluid flow direction (fluid outflow-side opening 8b) flows the fluid in a smoothly-expanding manner, thus smoothing the flow of the fluid through the opening 8 to thereby greatly reduce a flow resistance compared to the mesh filter forming a flow path having a rectangular prism-like opening 8 (a rectangular prism-like flow path having the same cross-sectional area of the flow path consistently from an upstream end to a downstream end of the fluid flow direction). As a result, the mesh filter 1 of the present embodiment can be used under the same pressure condition as an insert-molded mesh filter.

In the mesh filter 1 according to the present embodiment, the fluid inflow-side opening 8a can be used as a fluid outflow-side opening, and the fluid outflow-side opening 8b can be used as a fluid inflow-side opening, as in the same manner as the mesh filter 1 according to the third embodiment.

Also, while the mesh filter 1 according to the present embodiment shows an example case where the opening 8 has an octagonal planar shape, the planar shape of the opening 8 may be any polygonal shape apart from rectangular and octagonal shapes (for example, hexagon) as long as the opening 8 at upstream side of the fluid flow direction (fluid inflow-side opening 8a) flows the fluid in a smoothly-squeezing manner, and the opening 8 at downstream side of the fluid flow direction (fluid outflow-side opening 8b) flows the fluid in a smoothly-expanding manner.

### [Other Embodiment]

In the mesh filter 1 according to the present invention, a shape of the openings 8 is not limited to a rectangular, circular, and polygonal (for example, octagonal) shape, but the openings 8 can have any shape as long as the fluid inflow-side opening 8a flows the fluid in a smoothly-squeezing manner, and fluid outflow-side opening 8b flows the fluid in a smoothly-expanding manner.

The mesh filter according to each of the present embodiments of the present invention may be installed to a middle of a fuel supply pipe connected to a fuel injection device of an automobile or to a middle of an oil pipe channel of a lubrication device or the like of an automobile, and, not limited to the above, may be used in a wide range of technical field such as installing to a pipe channel of a water supply or air supply pipe to remove a foreign substance contained in a fluid (liquid such as water, or gas such as air).

### DESCRIPTION OF REFERENCE SIGNS

1: Mesh filter
2: Inner cylinder (frame body)
3: Outer cylinder (frame body)
4: Mesh member
6: Horizontal bar
7: Vertical bar
8: Opening
8a: Fluid inflow-side opening
8b: Fluid outflow-side opening
10: First curved face
11: Second curved face
12: Third curved face
13: Fourth curved face
14, 15: Side face (inner face)
19a, 19b: Inner face

## Claims

1. A mesh filter in which a mesh member for filtering out a foreign substance from a fluid is integrally injection-molded with frames, wherein
the mesh member is provided with a plurality of openings as flow path for the fluid, and
the openings include a fluid inflow-side opening and a fluid outflow-side opening along a fluid flow direction, in which an inner face of the fluid inflow-side opening has a flow path smoothly narrowing toward a downstream side of a fluid flow direction and an inner face of the fluid outflow-side opening has a flow path smoothly expanding toward the downstream side of the fluid flow direction.

2. A mesh filter in which a mesh member for filtering out a foreign substance from a fluid is integrally injection-molded with frames, wherein
the mesh member includes a plurality of horizontal bars aligned in parallel at regular intervals, a plurality of vertical bars aligned in parallel at regular intervals and perpendicular to the horizontal bars, and an opening defined by the adjacent pair of horizontal bars and the adjacent pair of vertical bars perpendicular to the horizontal bars to serve as a fluid flow path, the opening having a rectangular shape in planar view,
the horizontal bar has a side face part at an upstream side of the fluid flow direction that is formed of a first curved face as a convex curved face that narrows the opening toward the downstream side of the fluid flow direction, and a side face part at downstream side of the fluid flow direction that is formed of a second curved face as a convex curved face that expands the opening toward the downstream side of the fluid flow direction,
the vertical bar has a side face part at the upstream side of the fluid flow direction that is formed of a third curved face as a convex curved face that narrows the opening toward the downstream side of the fluid flow direction, and a side face part at downstream side of the fluid flow direction that is formed of a fourth curved face as a convex curved face that expands the opening toward the downstream side of the fluid flow direction, and
the opening is defined by smooth side faces of the adjacent pair of horizontal bars and smooth side faces of the adjacent pair of vertical bars.

3. The mesh filter according to claim 2, wherein
the first curved face and the second curved face are smoothly connected and the third curved face and the fourth curved face are smoothly connected.

4. The mesh filter according to claim 2, wherein
the first curved face and the second curved face are connected via a flat side face part of the horizontal bar,
the third curved face and the fourth curved face are connected via a flat side face parts of the vertical bar, and
a part of the openings formed of the flat side face parts of the adjacent pair of horizontal bars and the flat side face parts of the adjacent pair of vertical bars forms a flow path having a consistent rectangular prism-like cross-section.

5. The mesh filter according to claim 2 or 3, wherein
the horizontal bar and the vertical bar have an ellipsoidal cross-section.

6. The mesh filter according to any one of claims 2 to 4, wherein
the horizontal bar and the vertical bar have a substantially ellipsoidal cross-section.

7. The mesh filter according to any one of claims 2 to 4, wherein
the first to fourth curved faces are in an arc shape having a cross-section of the same radius of curvature.

8. The mesh filter according to any one of claims 2 to 7, wherein
the opening is configured in such a manner that, when the opening is divided into a fluid inflow-side opening and a fluid outflow-side opening along a fluid flow direction, the fluid outflow-side opening is formed in a reversed shape of the fluid inflow-side opening.
